# EUROPÄISCHE PATENTSCHRIFT

(11) **EP 3 530 090 B1**
(45) Veröffentlichungstag und Bekanntmachung des Hinweises auf die Patenterteilung: **12.02.2025**
(21) Anmeldenummer: 19169517.0
(22) Anmeldetag: 21.08.2013
(51) Int. Cl.: A01B 69/00, A01G 17/00

(54) **GERÄTESYSTEM FÜR DEN EINSATZ IM WEIN- UND OBSTBAU**
DEVICE SYSTEM FOR USE IN WINE AND FRUIT HARVESTING
SYSTÈME D'APPAREIL DESTINÉ À ÊTRE UTILISÉ DANS LA VITICULTURE ET L'ARBORICULTURE FRUITIÈRE

(30) Priorität: 30.08.2012 DE 102012108012
(43) Veröffentlichungstag der Anmeldung: 28.08.2019
(62) Teilanmeldung aus: 13181118.4
(73) Patentinhaber: BRAUN Maschinenbau GmbH, 76829 Landau (DE)
(72) Erfinder:
(74) Vertreter: Patentanwälte Bernhardt / Wolff Partnerschaft mbB

(56) Entgegenhaltungen:
- EP-A1- 2 361 496
- EP-A2- 1 290 929
- DE-C1- 3 916 852
- FR-A1- 2 563 970
- FREIMANN R ET AL: "GERAET STEUERT TRAKTOR: OPTIMIERUNGSMOEGLICHKEITEN DER GESPANNFUEHRUNG//IMPLEMENT GUIDED TRACTOR CONTROL: POSSIBLE SYSTEM OPTIMIZATION", VDI BERICHTE, DUESSELDORF, DE, vol. 1544, 1 January 2000 (2000-01-01), pages 201 - 206, XP001247937, ISSN: 0083-5560

## Beschreibung

Die Erfindung betrifft ein Gerätesystem zur Ankopplung an ein im Wein- und Obstbau zwischen Pflanzreihen einsetzbares Geräteträgerfahrzeug, mit wenigstens einem Bearbeitungsgerät, das ein Bearbeitungselement umfasst, dessen Arbeitsposition in Bezug auf das Geräteträgerfahrzeug verstellbar ist, und mit Sensoreinrichtungen umfassenden Mitteln zur automatischen Anpassung der Arbeitsposition des Bearbeitungselements an die jeweils erforderliche, sich bei Fortbewegung des Geräteträgerfahrzeugs zwischen den Pflanzreihen infolge Abweichungen der Positionen der Pflanzen von der Fluchtlinie der Pflanzreihen ändernde Arbeitsposition.

Bekanntermaßen kommen im Wein- und Obstbau Gerätesysteme zum Einsatz, in denen als Geräteträgerfahrzeuge kleine Traktoren dienen, die den verhältnismäßig schmalen Bereich zwischen benachbarten Reihen von Reben- oder Baumpflanzen befahren können. Mit Hilfe der angekoppelten Bearbeitungsgeräte lässt sich auf unterschiedliche Weise der Boden oder die Bepflanzung selbst bearbeiten, wobei die Bearbeitung der benachbarten Pflanzreihen zumeist gleichzeitig auf beiden Seiten des Geräteträgerfahrzeugs erfolgt. Schwankungen des Bodenniveaus, d.h. Abweichungen von der (ggf. geneigten) Bodenebene, sowie Variationen des Abstands der beiden Pflanzreihen zueinander bzw. des Abstands des Geräteträgerfahrzeugs zu den Pflanzen der jeweiligen Pflanzreihe gleicht der Fahrzeugführer durch entsprechende Verstellung der Bearbeitungselemente der Bearbeitungsgeräte aus, indem er die Arbeitshöhe, z.B. eines Pflugschars, und/oder den seitlichen Abstand des Bearbeitungselements zum Geräteträgerfahrzeug verändert.

Nach dem Stand der Technik ist es ferner bekannt, zwecks Erleichterung der Bedienung der Bearbeitungsgeräte durch den Fahrzeugführer Geräteträgerfahrzeuge mit einer automatischen Lenkung auszurüsten, welche das Geräteträgerfahrzeug ohne Zutun des Fahrzeugführers auf der Bahn zwischen den Pflanzreihen hält.

Ein durch Benutzung bekanntes Gerätesystem der eingangs genannten Art weist ein am Heck des Geräteträgerfahrzeuge montierbares Bearbeitungsgerät zum Kurzschneiden von Pflanzenbewuchs zwischen den Pflanzreihen auf. Das Bearbeitungsgerät umfasst zwei, unabhängig voneinander seitlich ein- und ausfahrbare Schneidköpfe, die außenseitig jeweils eine sich automatisch an Rebenstämme anlegende Sensorleiste aufweisen. Anhand der jeweiligen Relativposition der Sensorleiste zu dem Schneidkopf wird die jeweilige Ausfahrposition des Schneidkopfs automatisch eingestellt. Um Höheneinstellungen der Schneidköpfe muss sich der Fahrer des Geräteträgerfahrzeugs selbst kümmern.

Gerätesysteme der eingangs genannten Art gehen aus der EP 2 361 496 A1 sowie der DE 39 16 852 C1 hervor. Die Sensoreinrichtungen dieser bekannten Gerätesysteme sind unmittelbar einem Bearbeitungsgeräte oder einer Halterung für ein Bearbeitungsgerät zugeordnet und erfassen Objekte in unmittelbarer Nähe des Bearbeitungsgeräts bzw. der Halterung. Ähnliche Systeme sind in EP 1 290 929 A2 und FR 2 563 970 A1 beschrieben.

Der vorliegenden Erfindung liegt die Aufgabe zugrunde, neue Sensoreinrichtungen der eingangs erwähnten Art zu schaffen, die eine effizientere Bearbeitung von Pflanzungen im Wein- und Obstbau als nach dem Stand der Technik ermöglichen.

Die diese Aufgabe lösenden Sensoreinrichtungen nach der Erfindung sind dadurch gekennzeichnet, dass die Sensoreinrichtungen zur Erfassung auf die Sensoreinrichtungen bezogener Positionen der Pflanzen in Fahrtrichtung vor einem Bearbeitungsgerät des Geräteträgerfahrzeugs und ferner zur Erfassung der seit dem Zeitpunkt der Erfassung der jeweiligen Pflanzenposition erfolgten Änderung der Position der Sensoreinrichtungen vorgesehen sind, wobei die Sensoreinrichtungen einen optischen Sensor umfassen, welcher ausgebildet ist, das Bodeniveau sowie im Rahmen einer Bildauswertung die auf die Sensorposition bezogenen Koordinaten der Stämme der Pflanzenreihen in der Bodenebene zu erfassen.

Erfindungsgemäß werden die Positionen der Pflanzen in den Pflanzreihen in Fahrtrichtung vor dem Bearbeitungsgerät ermittelt. Vorteilhaft lassen sich die ermittelten Pflanzenpositionen dadurch zur gleichzeitigen Steuerung mehrerer, am Geräteträgerfahrzeug an verschiedenen Stellen angebrachter Bearbeitungsgeräte nutzen.

Vorzugsweise sind die Sensoreinrichtungen zur Erfassung der Positionskoordinaten der Pflanzen in der Bodenebene und ggf. auch zur Erfassung von Abweichungen des Bodenniveaus von der Bodenebene, insbesondere am jeweiligen Ort der Pflanzen, vorgesehen. In letzterem Fall liefern die Sensoreinrichtungen alle Informationen, um die Position des Bearbeitungselements sowohl in seitlicher Richtung parallel zum Boden als auch senkrecht zur Bodenebene vollautomatisch zu steuern.

Die Sensoreinrichtungen können insbesondere zur Ermittlung vollständiger Bodenprofile in Fahrtrichtung vor dem Geräteträgerfahrzeug vorgesehen sein. In diesem Fall können auch Abweichungen der Räder des Geräteträgerfahrzeugs von der jeweiligen mittleren Bodenebene erfasst und die Bearbeitungselemente in Bezug auf das Geräteträgerfahrzeug entsprechend gesteuert werden.

Die Sensoreinrichtungen weisen zweckmäßig wenigstens einen Sensor zur berührungslosen Erfassung der Positionen der Pflanzen auf, insbesondere zur berührungslosen Erfassung der Bodenprofile. Ein solcher Sensor kann zur Erfassung der Positionen der Pflanzen, insbesondere der Bodenprofile, durch Reflektion elektromagnetischer Wellen, z.B. Licht oder/und Radarwellen, vorgesehen sein.

In weiterer Ausgestaltung der Erfindung können die Sensoreinrichtungen neben einem Sensor, der die durch das Geräteträgerfahrzeug zurückgelegte Wegstrecke erfasst, auch einen den Lenkungseinschlag erfassenden Sensor aufweisen. Über den Lenkungseinschlag können ggf. Krümmungen der Wegstrecke erfasst und bei der Berechnung der erforderlichen Einstellungswerte für die Bearbeitungselemente berücksichtigt werden.

In weiterer Ausgestaltung der Erfindung können Sensoreinrichtungen einen bezogen auf die Fahrtrichtung unmittelbar bei dem Bearbeitungsgerät angebrachten Sensor zur Erfassung des Bodenniveaus umfassen, insbesondere zur Erfassung des jeweiligen Abstandes des Bearbeitungselements zum Boden.

Ein solcher Sensor ist zweckmäßig oberhalb einer Radspur angeordnet, so dass ggf. vorhandener Pflanzenbewuchs niedergedrückt und eine eindeutige Erkennung der Bodenoberfläche möglich ist.

Die Sensoreinrichtungen können ferner einen die Lage des Geräteträgerfahrzeugs erfassenden Lagesensor aufweisen. Über Signale eines solchen Lagesensors kann ggf. die Neigung eines Bearbeitungselements in Bezug auf die vertikale Achse des Geräteträgerfahrzeugs gesteuert werden.

Die Einrichtungen zur automatischen Verstellung der Arbeitsposition des Bearbeitungselements verarbeiten vorzugsweise die Signale mehrerer Sensoren gleichzeitig in Echtzeit, so dass auf diese Weise eine Vielzahl von Bearbeitungsgeräten gleichzeitig bedient werden und das Trägerfahrzeug sowohl vorne als auch am Heck sowie in Zwischenachspositionen zusätzlich an den Seiten mit Bearbeitungsgeräten bestückt sein kann.

In einer weiteren Ausführungsform der Erfindung können die genannten Sensoreinrichtungen zur Erfassung der Position der Pflanzen anhand einer Erfassung der Lage entlang der Pflanzreihen verlaufender Spanndrähte oder/und an den Pflanzen angebrachter Markierungen vorgesehen sein. Insbesondere können die Sensoreinrichtungen von den Spanndrähten oder/und Markierungen reflektierte oder aktiv ausgesandte elektromagnetische Wellen erfassen. Als Markierungen kommen z.B. reflektierende Schaltkreise in Betracht, die ggf. am Stamm der Pflanzen angebracht sind.

Die Erfindung wird nachfolgend anhand eines Ausführungsbeispiels und der beiliegenden, sich auf dieses Ausführungsbeispiel beziehenden Zeichnungen weiter erläutert. Es zeigen:
- Fig. 1: ein Geräteträgerfahrzeug mit einem an das Fahrzeug ankoppelbaren Gerätesystem in Draufsicht,
- Fig. 2: das Gerätesystem mit dem Geräteträgerfahrzeug von Fig. 1 in einer Seitenansicht,
- Fig. 3: ein Wirkungsschema einer Steuereinrichtung des Gerätesystems von Fig. 1 und 2, und
- Fig. 4: einen in einem Gerätesystem nach der Erfindung verwendbaren Sensor in schematischer Darstellung.

Ein Geräteträgerfahrzeug in Form eines kleinen Traktors 1 weist Vorderräder 2 und 3 sowie Hinterräder 4 und 5 auf. Die Breite des Traktors 1 beträgt in dem gezeigten Ausführungsbeispiel nur 1,20 m, so dass der Traktor zwischen zwei mit Weinreben bepflanzten Pflanzreihen 6 und 7 verfahrbar ist.

An der Vorderseite sind an den Traktor 1 Bearbeitungsgeräte 8 und 9 mit einem Bearbeitungselement 10 bzw. 12 angekoppelt. Weitere Bearbeitungsgeräte 12 und 13 mit einem Bearbeitungselement 14 bzw. 15 befinden sich in einer Zwischenachsposition. Schließlich sind auch Bearbeitungsgeräte 16 und 17 mit einem Bearbeitungselement 18 bzw. 19 an das Heck des Traktors 1 gekoppelt.

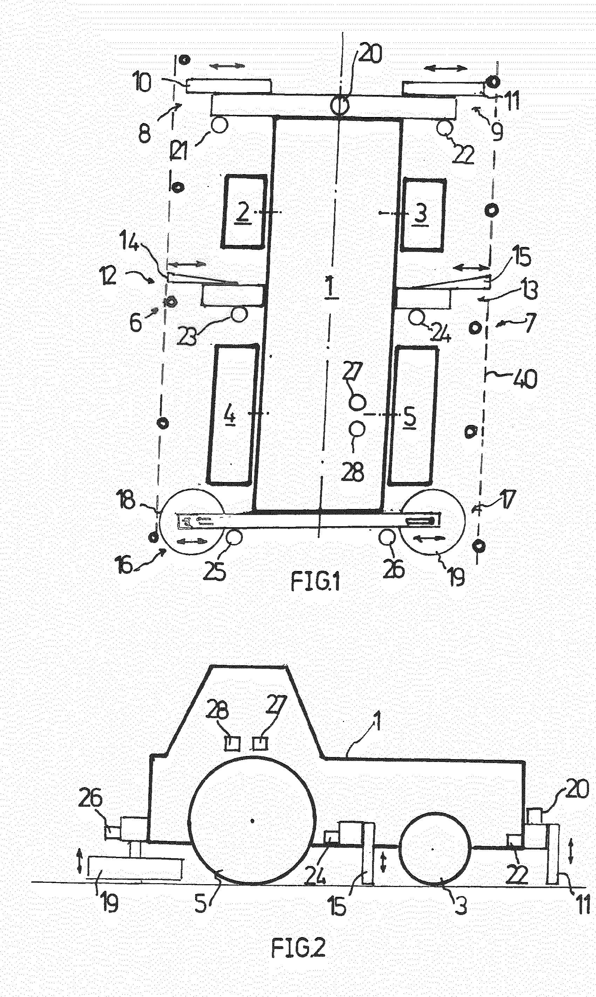

Wie in den Fig. 1 und 2 durch Pfeile angedeutet ist, lassen sich die Positionen der Bearbeitungselemente 10,11,14,15,18 und 19 senkrecht zur Fahrtrichtung des Traktors 1 sowohl in horizontaler wie auch vertikaler Richtung verstellen.

An der Vorderseite des Traktors 1 befindet sich ein Sensor 20, der den Bereich in Fahrtrichtung vor dem Traktor 1 z.B. optisch abtastet. Weitere optische oder mechanische Sensoren 21 bis 26 sind bezogen auf die Fahrtrichtung jeweils bei den Bearbeitungsgeräten 8,9,12,13,16 und 17 angeordnet. Die Sensoren 23 bis 26 befinden sich jeweils über der Spur der Vorderräder 2,3 bzw. Hinterräder 4,5.

Am Traktor 1 sind darüber hinaus ein Lagesensor 27 sowie ein Sensor 28 zur Erfassung des Fahrweges und/oder des Endschlagwinkels der Lenkung installiert.

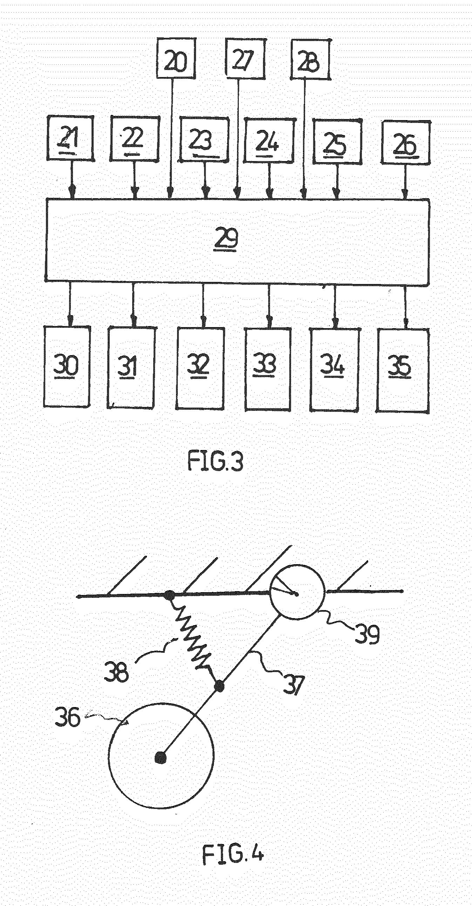

Wie aus Fig. 3 hervorgeht, stehen die Sensoren 20 bis 28 in Verbindung mit einer zentralen Steuereinrichtung 29, die ihrerseits mit (in den Fig. 1 und 2 nicht gezeigten) hydraulischen, pneumatischen oder/und elektromechanischen Einrichtungen 30 bis 35 zur Verstellung der Bearbeitungselemente 10,11,14,15,18 und 19 verbunden ist.

Bei den genannten Bearbeitungsgeräten kann es sich um die üblichen im Wein- und Obstbau, insbesondere zur Bodenbearbeitung, Reben- oder Baumbearbeitung sowie zum Kurzschneiden von Bodenbewuchs eingesetzten Geräte handeln.

Im Bearbeitungsbetrieb befährt der Traktor 1 den schmalen Bereich zwischen den Pflanzreihen 6 und 7, wobei der Traktorfahrer lediglich für die Lenkung des Traktors zu sorgen braucht. Alle mit Hilfe der Bearbeitungsgeräte 8,9,12,13,16 und 17 durchgeführten Bearbeitungsvorgänge, insbesondere erforderliche Einstellungen der Arbeitsposition der Bearbeitungselemente 10,11,14,15,18 und 19, laufen vollautomatisch ab.

Während der Fahrt des Traktors 1 erfasst der Sensor 20, z.B. im Rahmen einer Bildauswertung, die auf z.B. die Sensorposition bezogenen Koordinaten der Rebenstämme in der Bodenebene in den vor dem Traktor liegenden Pflanzreihen 6 und 7, wobei diese Positionskoordinaten von einer gedachten Fluchtlinie 40 der Pflanzreihe abweichen können. Die durch den Sensor 20 laufend ermittelten Positionsmesswerte werden in der Steuereinrichtung 29 zwischengespeichert.

Die Steuereinrichtung 29 empfängt ferner den Fahrweg des Traktors 1 betreffende Messwerte von dem Sensor 28, so dass die Steuereinrichtung 29 die Zeitpunkte bzw. Fahrwege berechnen kann, zu denen bzw. nach denen die jeweiligen Bearbeitungsgeräte 8,9,12,13,16 und 17 in Fahrtrichtung die Positionen der vorher durch den Sensor 20 vermessenen Rebenstämme erreichen. Anhand der so ermittelten Daten kann die Steuereinrichtung 29 Steuersignale berechnen, die eine entsprechende seitliche Verstellung der Bearbeitungselemente 10,11,14,15,18 und 19, bewirken.

Die Sensoren 21 bis 26 liefern der Steuereinrichtung 29 laufend den Abstand der Bearbeitungsgeräte 8,9,12,13,16 und 17 zum Boden betreffende Messsignale, die eine entsprechende Einstellung der jeweiligen Bearbeitungselemente 10,11,14,15,18 und 19 ermöglichen.

Ergänzend zu den Signalen der Sensoren 21 bis 26 kann die Steuereinrichtung 29 Messsignale des Neigungssensors 27 bei der Berechnung von Einstellsignalen für die Höheneinstellung der Bearbeitungselemente 10,11,14,15,18und 19 verwenden.

Die für die Einstellung des Bodenabstandes maßgebenden Sensoren 21 bis 26 könnten abweichend von dem gezeigten Ausführungsbeispiel auch mit den Bearbeitungselementen 10,11,14,15,18 und 19 selbst verbunden und mit diesen verstellbar sein. Während auch an den Bearbeitungselementen selbst montierte Sensoren optische Sensoren sein können, ließe sich hierzu ein in Fig. 4 schematisch dargestellter Sensor verwenden, der den Boden mechanisch mit Hilfe eines Rades 36 abtastet, das an einem Schwenkhebel 37 drehbar gelagert ist. Der durch eine Feder 38 beaufschlagte Schwenkhebel 37 steht mit einer den Schwenkwinkel erfassenden Winkelmesseinrichtung 39 in Verbindung. Aus dem erfassten Winkel 39 lässt sich die jeweilige Höhe des Bearbeitungselements über dem Boden ermitteln.

Alternativ zu den Sensoren 21 bis 26 könnten die erforderlichen Messungen des Bodenniveaus bereits mit Hilfe des Sensors 20 erfolgen, der im Übrigen zur Ermittlung vollständiger Bodenprofile vor dem Geräteträgerfahrzeug ausgelegt sein könnte.

Über die beschriebenen Verstellmöglichkeiten der Bearbeitungselemente hinaus könnte auch eine Verstellmöglichkeit der Neigung der Bearbeitungselemente in Bezug auf die vertikale Achse des Geräteträgerfahrzeugs möglich sein, die Neigung dieser Bearbeitungselemente könnte dann durch Signale des obengenannten Lagesensors 27 gesteuert werden.

## Patentansprüche

1. Sensoreinrichtungen zur Ankoppelung an ein Geräteträgerfahrzeug einsetzbar im Wein- und Obstbau zwischen Pflanzenreihen (6, 7),
**dadurch gekennzeichnet,**
**dass** die Sensoreinrichtungen (20-28) zur Erfassung auf die Sensoreinrichtungen (20-28) bezogener Positionen der Pflanzen in Fahrtrichtung vor einem Bearbeitungsgerät des Geräteträgerfahrzeugs (1) und ferner zur Erfassung der seit dem Zeitpunkt der Erfassung der jeweiligen Pflanzenposition erfolgten Änderung der Position der Sensoreinrichtungen (20-28) vorgesehen sind, **dadurch gekennzeichnet, dass**
die Sensoreinrichtungen (20-28) einen optischen Sensor (20) umfassen, welcher ausgebildet ist, das Bodeniveau sowie im Rahmen einer Bildauswertung die auf die Sensorposition bezogenen Koordinaten der Stämme der Pflanzenreihen (6, 7) in der Bodenebene zu erfassen.

2. Sensoreinrichtungen nach Anspruch 1,
**dadurch gekennzeichnet,**
**dass** die Sensoreinrichtungen (20-28) zur Erfassung der Positionskoordinaten der Pflanzen in der Bodenebene und ggf. zur Erfassung von Abweichungen des Bodenniveaus von der Bodenebene, insbesondere am jeweiligen Ort der Pflanzen, vorgesehen sind.

3. Sensoreinrichtungen nach Anspruch 1 oder 2,
**dadurch gekennzeichnet,**
**dass** die Sensoreinrichtungen (20-28) zur Ermittlung von Bodenprofilen vorgesehen sind.

4. Sensoreinrichtungen nach einem der Ansprüche 1 bis 3,
**dadurch gekennzeichnet,**
**dass** die Sensoreinrichtungen (20-28) zur berührungslosen Erfassung der Positionen der Pflanzen, insbesondere berührungslosen Erfassung der Bodenprofile, durch Reflexion elektromagnetischer Wellen, z.B. Licht- oder/und Radarwellen, vorgesehen sind.

5. Sensoreinrichtungen nach einem der Ansprüche 1 bis 4,
**dadurch gekennzeichnet,**
**dass** die Sensoreinrichtungen (20-28) einen Sensor (20) umfassen.

6. Sensoreinrichtungen nach einem der Ansprüche 1 bis 5,
**dadurch gekennzeichnet,**
**dass** die Sensoreinrichtungen (20-28) einen die zurückgelegte Wegstrecke der Sensoreinrichtungen (20-28) erfassenden Sensor (28) aufweisen.

7. Sensoreinrichtungen nach einem der Ansprüche 1 bis 6
**dadurch gekennzeichnet,**
**dass** die Sensoreinrichtungen (20-28) einen Sensor (21-26) zur Erfassung eines Bodenniveaus umfassen.

8. Sensoreinrichtungen nach einem der Ansprüche 1 bis 7,
**dadurch gekennzeichnet,**
**dass** die Sensoreinrichtungen (20-28) einen die Lage der Sensoreinrichtungen (20-28) erfassenden Lagesensor (27) aufweisen.

9. Verfahren zur automatischen Einstellung der Arbeitsposition wenigstens eines Bearbeitungselements (10,11,14,15,18,19) eines an ein im Wein- und Obstbau zwischen Pflanzenreihen (6,7) einsetzbaren Geräteträgerfahrzeugs (1) ankoppelbaren Gerätesystems, **dadurch gekennzeichnet, dass** mittels Sensoreinrichtungen (20-28) nach einem der Ansprüche 1 bis 8 die Positionen der Pflanzen in Fahrtrichtung vor dem Geräteträgerfahrzeug (1) und die seit dem Zeitpunkt der Erfassung der jeweiligen Pflanzenposition erfolgte Änderung der Position des Geräteträgerfahrzeugs (1) erfasst werden und Einrichtungen (30-35) die Arbeitsposition des Bearbeitungselements (10,11,14,15,18,19) anhand der ermittelten Positionen der Pflanzen und ermittelten Änderungen der Position des Geräteträgerfahrzeugs (1) steuern.

10. Verfahren nach Anspruch 9, **dadurch gekennzeichnet, dass** mittels der Sensoreinrichtungen (20-28) ein Bereich in Fahrtrichtung vor dem Geräteträgerfahrzeug (1) unter Erfassung beider Pflanzenreihen (6,7) und Ermittlung der Positionen der Pflanzenstämme in den Pflanzenreihen in der Bodenebene sowie unter Ermittlung vollständiger Bodenprofile erfasst wird.

## Claims

1. Sensor devices for connection to a device carrier vehicle able to be used between rows of plants (6, 7) in viticulture and fruit cultivation, **characterized in that** the sensor devices (20-28) are configured to detect positions of the plants in relation to the sensor devices (20-28) in the direction of travel in front of a processing device of the device carrier vehicle (1) and also to detect the change in the position of the sensor devices (20-28) that has occurred since the time of detection of the respective plant position, **characterized in that**
the sensor devices (20-28) comprise an optical sensor (20) that is configured to detect the soil level and, in the course of an image evaluation, to detect the coordinates of the stems of the rows of plants (6, 7) in the soil plane in relation to the sensor position.

2. Sensor devices according to Claim 1,
**characterized**
**in that** the sensor devices (20-28) are configured to detect the position coordinates of the plants in the soil plane and, if necessary, to detect deviations of the soil level from the soil plane, in particular at the respective location of the plants.

3. Sensor devices according to Claim 1 or 2, **characterized**
**in that** the sensor devices (20-28) are configured to determine soil profiles.

4. Sensor devices according to one of Claims 1 to 3, **characterized**
**in that** the sensor devices (20-28) are configured to contactlessly detect the positions of the plants, in particular to contactlessly detect the soil profiles, through the reflection of electromagnetic waves, for example light waves and/or radar waves.

5. Sensor devices according to one of Claims 1 to 4, **characterized**
**in that** the sensor devices (20-28) comprise a sensor (20) .

6. Sensor devices according to one of Claims 1 to 5, **characterized**
**in that** the sensor devices (20-28) have a sensor (28) that is configured to detect the distance travelled by the sensor devices (20-28).

7. Sensor devices according to one of Claims 1 to 6, **characterized**
**in that** the sensor devices (20-28) comprise a sensor (21-26) that is configured to detect a soil level.

8. Sensor devices according to one of Claims 1 to 7, **characterized**
**in that** the sensor devices (20-28) have a position sensor (27) that is configured to detect the position of the sensor devices (20-28).

9. Method for automatically setting the working position of at least one processing element (10,11,14,15,18,19) of a device system able to be connected to a device carrier vehicle (1) able to be used between rows of plants (6, 7) in viticulture and fruit cultivation, **characterized in that** the positions of the plants in the direction of travel in front of the device carrier vehicle (1) and the change in the position of the device carrier vehicle (1) that has occurred since the time of detection of the respective plant position are detected by way of sensor devices (20-28) according to one of Claims 1 to 8, and devices (30-35) control the working position of the processing element (10,11,14,15,18,19) based on the determined positions of the plants and determined changes in the position of the device carrier vehicle (1).

10. Method according to Claim 9, **characterized in that** an area in the direction of travel in front of the device carrier vehicle (1) is detected by way of the sensor devices (20-28) with detection of both rows of plants (6,7) and determination of the positions of the plant stems in the rows of plants in the soil plane and with determination of complete soil profiles.

## Revendications

1. Dispositifs capteurs destinés à être couplés à un véhicule support d'outils utilisable dans la viticulture et dans l'arboriculture fruitière entre des rangées de plantes (6, 7), **caractérisés en ce que** les dispositifs capteurs (20-28) sont configurés pour la détection de positions, se rapportant aux dispositifs capteurs (20-28), des plantes dans le sens de déplacement devant un outil de traitement du véhicule support d'outils (1) et en outre pour la détection de la modification de la position des dispositifs capteurs (20-28) qui a eu lieu depuis le moment de la détection de la position respective des plantes, **caractérisés en ce que** les dispositifs capteurs (20-28) comprennent un capteur optique (20) qui est configuré pour la détection du niveau du sol ainsi que, dans le cadre d'une évaluation d'images, des coordonnées, se rapportant à la position du capteur, des troncs des rangées de plantes (6, 7) dans le plan du sol.

2. Dispositifs capteurs selon la revendication 1, **caractérisés en ce que** les dispositifs capteurs (20-28) sont configurés pour la détection des coordonnées de position des plantes dans le plan du sol et le cas échéant pour la détection d'écarts du niveau du sol par rapport au plan du sol, en particulier en chaque emplacement des plantes.

3. Dispositifs capteurs selon la revendication 1 ou 2, **caractérisés en ce que** les dispositifs capteurs (20-28) sont configurés pour la détermination de profils du sol.

4. Dispositifs capteurs selon l'une des revendications 1 à 3, **caractérisés en ce que** les dispositifs capteurs (20-28) sont configurés pour la détection sans contact des positions des plantes, en particulier la détection sans contact des profils du sol, par réflexion d'ondes électromagnétiques, par exemple d'ondes lumineuses et/ou d'ondes radar.

5. Dispositifs capteurs selon l'une des revendications 1 à 4, **caractérisés en ce que** les dispositifs capteurs (20-28) comprennent un capteur (20).

6. Dispositifs capteurs selon l'une des revendications 1 à 5, **caractérisés en ce que** les dispositifs capteurs (20-28) présentent un capteur (28) configuré pour la détection de la distance parcourue par les dispositifs capteurs (20-28).

7. Dispositifs capteurs selon l'une des revendications 1 à 6, **caractérisés en ce que** les dispositifs capteurs (20-28) comprennent un capteur (21-26) configuré pour la détection d'un niveau du sol.

8. Dispositifs capteurs selon l'une des revendications 1 à 7, **caractérisés en ce que** les dispositifs capteurs (20-28) présentent un capteur de position (27) configuré pour la détection de la position des dispositifs capteurs (20-28).

9. Procédé de réglage automatique de la position de travail d'au moins un élément de traitement (10, 11, 14, 15, 18, 19) d'un système d'outil pouvant être couplé à un véhicule support d'outils (1) utilisable dans la viticulture et l'arboriculture fruitière entre des rangées de plantes (6, 7), **caractérisé en ce que** les positions des plantes dans le sens de déplacement devant le véhicule support d'outils (1) et la modification de la position du véhicule support d'outils (1) qui a eu lieu depuis le moment de la détection de la position respective des plantes sont détectées au moyen de dispositifs capteurs (20-28) selon l'une des revendications 1 à 8 et des dispositifs (30-35) commandent la position de travail de l'élément de traitement (10, 11, 14, 15, 18, 19) à l'aide des positions déterminées des plantes et des modifications déterminées de la position du véhicule support d'outils (1).

10. Procédé selon la revendication 9, **caractérisé**
**en ce qu'**une zone dans le sens de déplacement devant le véhicule support d'outils (1) est détectée au moyen des dispositifs capteurs (20-28), tout en détectant les deux rangées de plantes (6, 7) et en déterminant les positions des troncs des plantes dans les rangées de plantes dans le plan du sol ainsi qu'en déterminant des profils complets du sol.
